# EUROPEAN PATENT SPECIFICATION

(11) **EP 1 731 421 B1**
(45) Date of publication and mention of the grant of the patent: **13.08.2008**
(21) Application number: 05253552.3
(22) Date of filing: 09.06.2005
(51) Int. Cl.: B64C 27/58, B64C 13/50, F16H 25/20, F16H 25/22

(54) **Electro-mechanical linear actuator**
Elektro-mechanischer Lineartrieb
Actionneur linéaire éléctrique

(43) Date of publication of application: 13.12.2006
(60) Divisional application: 07023213.7
(73) Proprietor: Claverham Limited, Claverham Bristol BS49 4NF (GB)
(72) Inventor: Collins, Andrew John, Weston Super Mare, BS23 2YE (GB)
(74) Representative: Power, Philippa Louise

(56) References cited:
- EP-A- 0 356 753
- EP-A- 0 552 129
- EP-A- 1 004 798
- EP-A- 1 052 427
- EP-A- 1 258 449
- FR-A- 2 839 127
- US-A- 1 893 728
- US-A- 2 674 438
- US-A- 3 195 366
- US-A- 4 179 944
- US-A- 4 679 485
- US-A- 4 745 815
- US-A- 5 092 539
- US-A- 5 848 554
- US-A1- 2003 029 258

## Description

This invention relates to an electro-mechanical linear actuator as defined by the features of the preamble of claim 1 and known from US-A-3 195 366, in particular one suited for use where a high degree of safety is required, such as in aircraft flight controls and in particular helicopter flight controls, where space and mass savings are of particular importance.

The Primary Flight Controls (PFCs) of an aeroplane include the pitch, roll and yaw, which are controlled through manipulation of the elevator, ailerons and rudder respectively. In a helicopter the PFCs control the rotorcraft attitude through manipulation of the main and tail rotor blades. It is highly important that the failure risk of these controls is kept to a minimum, as failure could result in the loss of the aircraft and/or the life of those on board.

Since the advent of jet powered flight, safety critical PFCs have traditionally augmented and then later replaced the limited command input force of the pilot with hydraulic power. One of the advantages of using hydraulic based actuators is their resistance to seizure. As the actuator pistons themselves are simple devices there is no practical possibility of seizure within a well maintained system. Hydraulic systems are not without their disadvantages however, with a relatively high cost of ownership and frequent maintenance for replacement of worn out seals etc reducing the availability of the aircraft platform to perform its primary function.

This is where electro-mechanical based systems become advantageous. As technology has advanced in recent years electro-mechanical actuators with sufficient power to mass ratio for PFC applications have become more commercially feasible. In the most demanding servo control environments the electro-mechanical actuator requires less maintenance, can stay on the aircraft for many thousands of hours longer and, providing all existing hydraulic systems are removed from the aircraft, electro-mechanical systems will also save mass.

In overview, linear electro-mechanical actuators are typically made up of a force generator in the form of a motor, which takes electrical current and converts this into a torque, and a system of mechanical gearing to gear up the force of the motor and convert the rotary motion of the motor to the linear motion of the output rod.

EP0671070 is an example of an electro-mechanical linear actuator. Here the rotor of the motor is attached to an elongated cylinder with a central threaded bore. This is engaged by a number of transmission rollers, which are in turn engaged with grooves on the output shaft. As the rotor rotates, the elongated cylinder rotates with it, moving the transmission rollers along the thread and thus linearly moving the output shaft. This type of reduced friction transmission is known as a planetary roller screw. Other forms of rotary-to-linear transmissions are known, such as a simple threaded engagement between nut and shaft, and a ball screw, in which ball bearings are placed between the threads of these elements to reduce friction and the risk of seizure.

Typically the required probability of failure which may result in an unsafe condition is less than 1x10⁻⁹ unsafe failures per flight hour, where unsafe is classed as loss of aircraft and/or life. As the reliability of the relatively complex hydraulic systems could never be guaranteed to this level, it has typically been necessary to add some form of redundancy. Hence within PFC applications hydraulic actuators are often designed around the use of two entirely independent hydraulic systems. This philosophy of adding multiple 'lanes' of redundancy to ensure a system is suitably resilient to unsafe failures is well known and commonly applied across both hydraulic and electrical systems including both power and command signals.

Applying the concept of lane redundancy to an electro-mechanical system is relatively simple for both electrical power and command signals. Hence an electro-mechanical actuator may have, for example, four separate motors and four separate position measuring devices to ensure the probability of unsafe failures is maintained well below the required level. Adding redundancy to the mechanical gearing element of the electro-mechanical system is significantly more problematic however. Including multiple sets of independent mechanical gearing is always possible, but the designer must find a solution to overcome the problem of how to prevent seizure in any one of the mechanical drives resulting in a complete seizure of the output it is attached to. One potential solution to this could be to fit multiple actuators along with appropriate force summing devices, which still enable a degree of independence. However, this is often impractical for a variety of reasons, including space and mass and is particularly unsuitable for helicopters.

US 5,092,539 and US 4,745,815 both describe linear actuators with inbuilt redundancies. US 5,092,539 discloses two co-axial ball screws, the shaft of the outer ball screw is secured to the nut of the inner ball screw, while the inner shaft is prevented from rotating by a set of brakes. During normal use, rotation of the outer nut will result in the linear movement of both the inner and outer shafts. However, if one of the ball screws were to jam, the actuator would still be able to extend to the length of a single shaft, thus providing limited operation. This therefore only provides a partial redundancy, with the actuator not being able to fully operate once a jam has occurred. In addition, this actuator requires the use of brakes and a second motor attached to the inner shaft, so that if the outer nut jams, the inner shaft can be released and rotated by the additional motor. This adds a number of extra components to the apparatus, which take up space and are themselves capable of seizure.

US 4,745,815 also discloses a ball screw actuator. Here the electric motor is connected via gears to an outer nut of a ball screw actuator. The shaft of the ball screw is threadedly connected to an inner co-axial lead screw, which is connected to the output arm. Electrically controlled brakes prevent the rotational movement of the shaft of the ball screw and the lead screw. If jamming occurs between the nut and shaft of the ball screw, this is sensed by appropriate means and a signal is fed to the controller, which then directs a signal to release the first brake. The release of this brake allows the shaft of the ball screw to rotate relative to the lead screw. This powers the linear movement of the lead screw, and thus the output arm. If the motor seizes, the brake on the lead screw can also be released to allow reaction movement of the actuator. Again, this system requires numerous brakes, which can themselves fail and in addition take up space within the aircraft. The gearing between the motor and ball screw is also liable to seizure.

There therefore exists a need for an electro-mechanical actuator with a redundancy which does not increase the space required by the actuator and which does not in itself introduce more elements which are themselves open to malfunction.

According to the present invention defined by the features of claim 1 there is provided an electro-mechanical linear actuator comprising a motor connected to first and second drives, each of the first and second drives, when in operation, converting rotary to linear motion by rotation of a first element relative to a second element, wherein the electro-mechanical linear actuator is configured such that a resistance to operation (relative rotation) of the second drive is greater than that of the first drive, such that when the first drive is operational the second drive is not and when the first drive fails, the relative rotational force between the first and second elements of the second drive increases to cause the second drive to become operational.

In this way the second, or redundant, drive mechanism is prevented from operating during normal working of the first drive without the need for brake units or any other additional electro-mechanical device, which would add mass to the actuator and would itself be capable of failure.

Failure of the first drive occurs when the drive seizes or suffers severe degradation such that the resistance to operation of the first drive increases beyond that of the second drive. Therefore the switch from the first to second drive is initiated purely through an increase in the relative rotational force on the second drive.

One means of creating a linear actuator in accordance with the present invention is to have a second, or secondary, drive with a greater frictional resistance to operation that the first, or primary, drive. For example, the secondary drive can be a lead screw as this has a greater sliding resistance than other common rotary-to-linear drives. Either a ball screw or planetary roller screw can then preferably be used as the primary drive as these have a low frictional resistance to relative rotation and thus provide a reliable drive system. Most preferably the primary drive would comprise a planetary roller screw as these can withstand a greater load than equivalently sized ball screws.

In this embodiment therefore as the sliding friction between the elements of the secondary drive is greater that the frictional resistance of the primary drive, the primary drive will operate while the secondary drive remains inactive. If the primary drive does fail such that elements of the drive can no longer rotate relative to each other, the frictional resistance of the secondary drive will be overcome so that the secondary drive will rotate to produce the required linear movement.

This embodiment is believed to be novel and inventive in its own right and therefore, according to another aspect of the present invention, there is provided an electro-mechanical linear actuator comprising a motor connected to primary and secondary rotary-to-linear drives, wherein the secondary drive has a greater frictional resistance to operation than the primary drive such that the secondary drive only becomes operational upon failure of the primary drive.

While this embodiment results in a linear actuator with a redundant drive which is activated immediately upon primary drive failure, and which does not require additional electro-mechanical components, the provision of a high friction redundant drive has the disadvantage that the high friction leads to reduced efficiency of the secondary drive, reducing the available actuator performance. Therefore, in an alternative preferred embodiment of the invention, anchoring means are provided to prevent the relative rotation of the first and second elements of the secondary drive, wherein the anchoring means are adapted to release the secondary drive elements when subjected to a predetermined rotational force provided by the increase in the relative rotational force between first and second elements of the secondary drive. Therefore the secondary drive is only free to operate once the relative rotational force between the elements of the drive has been increased.

This allows both drives to be low friction drives, such as ball screws or planetary roller screws, as the resistance to operation of the secondary drive is provided by the anchoring means rather than the friction between the elements of the drive itself.

Preferably the increase in rotational force is provided by an increase in the torque produced by the motor. This increase in rotational force is required to release the secondary drive elements from the anchoring means. In embodiments in which the resistance to operation is provided by the frictional resistance of the secondary drive, an increase in the torque produced by the motor assists in overcoming this frictional resistance, although a torque increase is not essential in such embodiments.

The increase in torque can be achieved using a simple servo control feedback circuit which, upon failure of the primary drive, causes the current supplied to the motor to increase, thus increasing the torque produced by the motor up to a point where the secondary drive becomes operational.

This aspect is considered to be novel and inventive in its own right and therefore, viewed from another aspect, the present invention provides an electro - mechanical linear actuator comprising a motor connected to primary and secondary rotary-to-linear drives, the actuator being arranged such that, during normal operation, the motor produces a predetermined torque to operate the primary drive, the secondary drive being non-operational, and that upon failure of the primary drive, the torque produced by the motor increases to initiate operation of the secondary drive.

In one preferred embodiment the torque produced by the motor can be controlled by a flight control computer.

A common feature of all these aspects is that no electrical component other than the motor is required to bring the secondary drive into operation. Instead, the secondary drive is activated purely through a change in the relative rotational force acting on the secondary drive. This reduces the number of parts required and thus the possibilities for malfunction.

Preferably the primary and secondary drives are in direct communication with each other. In this way the drives can be driven by the same gearing system and so no extra parts are added to the system. This provides an integrated yet independent redundancy.

An increased number of gears results in an increased potential for seizure and jamming. Therefore, any reduction in the number of gears is to be welcomed. It is preferable therefore for the rotor of the motor to be in direct communication with at least either the primary or secondary drive. Preferably the rotor comprises an elongated hollow cylinder which is connected via the primary and secondary drives to a generally cylindrical output ram. The output ram is preferably coaxial to but radially spaced from the rotor and is moveable in the axial direction. Preferably the primary and secondary drives are located within the radial space between the rotor and the output ram, the primary and secondary drives being coaxial with each other. The rotation of the rotor can thus be communicated to the primary and secondary drives which translate the torque into lateral movement of the output ram.

Preferably the output ram extends through the rotor and is movable in the axial direction. This configuration reduces the space taken up by the actuator and protects the drive components from damage by housing them within the rotor. Although this is a preferred configuration it is of course also possible for the rotor and primary and secondary drives to be housed within the output ram.

Preferably the linear actuator comprises a cylindrical nut which is positioned coaxially with and radially between the output ram and the rotor, and which is adapted to form one element of both the primary and secondary drives, and rotates relative to the output ram when one of the drives is in operation and relative to the rotor when the other drive is in operation, wherein the rotation of the cylindrical nut moves the output ram in the axial direction.

Preferably the rotor comprises a thread on its interior surface which co - operates with a thread provided on the exterior of the cylindrical nut to form one of the primary and secondary drives.

Preferably the cylindrical nut further comprises a thread on its interior surface which co-operates with a thread provided on the exterior of the output ram to form one of the primary and secondary drives.

This feature allows the secondary drive to be comprised of pre-existing elements (the rotor and the cylindrical nut or the cylindrical nut and the output ram) within the actuator such that the inclusion of the secondary drive does not add significant mass or additional gearing systems to the actuator. This makes the actuator particularly suited to safety critical environments where the available space and mass are limited, such as helicopter primary controls.

By 'co-operates with' it is meant that the components can co-operate directly, i.e. to form a lead screw, or via intermediate elements, such as ball bearings or rollers.

By 'thread' it is meant either a groove or a ridge which can co-operate with a complementary thread to transform rotary motion of a first element into linear movement of a second element. It is not necessary within the context of this invention for both of the co-operating threads of a rotary-to- linear drive to be spiral or helical in shape and the term is intended to extend to concentric grooves or ridges which can co-operate with other threads via rollers or ball bearings to achieve the desired rotary to linear transformation.

The difference in relative rotational resistance between the two threaded interfaces determines which drive each interface will form, with the interface with the greatest relative rotational resistance forming the secondary, or redundant, drive. For example, if the threads on the rotor co-operated via ball bearings with the external thread of the cylindrical nut while the internal thread of the cylindrical nut meshed with the thread of the output ram to form a lead screw, the latter would have the greater frictional resistance and would therefore form the secondary drive. In other words, the rotor and the cylindrical nut would form the first and second elements of the primary drive while the cylindrical nut and the output ram would form the first and second elements of the secondary drive. However, it is preferred that the rotor and the cylindrical nut co-operate to form the first and second elements of the secondary drive. In one embodiment this drive is preferably in the form of a lead screw.

As the sliding friction between the threads of the rotor and the cylindrical nut is greater than the frictional resistance of the primary drive (which comprises co-operating threads on the interior of the cylindrical nut and exterior of the output ram), the cylindrical nut will not rotate relative to the rotor unless there is a failure in the primary drive. If the primary drive does fail such that the cylindrical nut can no longer rotate relative to the output ram, the frictional resistance of the secondary drive will be overcome so that the cylindrical nut is rotated relative to the rotor and moved axially along the rotor, taking the output ram with it. Therefore, the cylindrical nut will always rotate relative to either the rotor or the output ram in order to effect linear movement of the output ram.

In an alternative embodiment, the greater rotational resistance of the secondary drive can be provided by anchoring means as discussed above. In this embodiment therefore, the interface between the rotor and the cylindrical nut and the interface between the cylindrical nut and the output ram can both comprise ball or roller screws and can have the same frictional resistance. Anchoring means are then provided between either the rotor and the cylindrical nut or the cylindrical nut and the output ram, so as to prevent the relative rotation of those two elements until such time that they are released by the anchoring means.

More generally therefore it is preferable that the anchoring means are attached at one end thereof to the cylindrical nut and at the other end thereof to the element with which the cylindrical nut rotates during normal operation.

As it is preferable for the secondary drive to be formed from the rotor and the exterior of the cylindrical nut, it is preferable for the anchoring means to be provided between the rotor and the cylindrical nut to prevent the relative rotation of these elements. Therefore, during normal operation the cylindrical nut will rotate together with the rotor while the output arm is linearly moved by the primary drive. If the primary drive jams, the rotor torque is increased by a feedback circuit to a level at which the anchoring means release the secondary drive and allow the cylindrical nut to rotate relative to the rotor to linearly move the output ram.

The anchoring means may comprise shear members which shear once a predetermined rotational force is applied thereto. This force is provided by the increase in relative rotational force which occurs when the primary drive fails. Therefore the shear members only shear to release the secondary drive once the primary drive fails and the relative rotational force on the secondary drive increases.

Alternatively the anchoring means can comprise spring loaded detents which are secured to one element of the secondary drive and which are biased to protrude into grooves provided in the other element of the drive. The springs of the spring loaded detents are biased such that the detents are pushed into the grooves to anchor the two elements relative to one another such that they rotate together. The biasing force of the springs is chosen such that it is overcome by a predetermined rotational force which is only experienced when the relative rotational force increases after primary drive failure. Thus, the detents are released from the grooves upon primary drive failure such that the relative rotation of the respective elements of the secondary drive are no longer impeded by the detents.

Viewed from another aspect the invention provides an electro-mechanical linear actuator comprising a generally cylindrical output ram encircled by a co-axial cylindrical nut, the nut and the ram being housed within a co-axial hollow cylindrical rotor, wherein the cylindrical nut is in threaded communication with the output ram and the rotor, and the actuator is configured such that in use the cylindrical nut rotates with the rotor relative to the output ram and, if the movement of the cylindrical nut with respect to the output ram becomes inhibited, the cylindrical nut rotates relative to the rotor, wherein both forms of rotation act to move the ram in the axial direction.

This structure reduces the number of gears in the actuator and therefore the potential for seizure. In addition, it reduces the overall mass of the actuator by using the cylindrical nut for both the primary and the secondary drives.

The rotor can be the rotor of the motor which provides the rotational force. However, it is also possible for the rotor to be a separate element connected to the motor directly or via a gearing system. This allows the actuator to be positioned at a location distanced from the motor when desired. However, in order to reduce the number of gears in the system, and hence the potential for seizure, it is preferable for the rotor to be directly attached to the rotor of the motor or, more preferably, to be the rotor of the motor.

The actuator can also be constructed such that the output ram houses both the cylindrical nut and the rotor. Therefore, viewed from a further aspect the invention provides an electro-mechanical linear actuator comprising a cylindrical nut in threaded communication with an output ram and a rotor, the output ram and rotor both being generally cylindrical and co-axial with the cylindrical nut, the actuator being configured such that in use the cylindrical nut rotates relative to either the output ram or the rotor and, if this movement of the cylindrical nut becomes inhibited, the cylindrical nut rotates relative to the other element, wherein both forms of rotation act to move the ram in the axial direction.

As mentioned previously, it is preferable for the cylindrical nut to rotate relative to the output ram during normal operation and only rotate relative to the rotor if the movement of the cylindrical nut relative to the output ram becomes inhibited. In addition, it is also preferable for the rotor to be the rotor of the motor.

During normal operation, the cylindrical nut should remain fixed in the axial direction. This is particularly important in the present invention as, when the output ram is being moved via the secondary drive, the cylindrical nut is moved axially along the threads of the rotor. Therefore, in order to maintain full stroke capability of the output ram, at least one full stroke length must be present on each side of the cylindrical nut. If the cylindrical nut moves axially relative to the rotor during normal use, for example due to vibrations, this may not be the case.

Therefore it is preferable that the actuator further comprises axial fixing means, the axial fixing means being attached at one end to the cylindrical nut and at the other end to the element with which the cylindrical nut rotates during normal operation (primary drive), the axial fixing means being adapted to maintain the axial position of the cylindrical nut relative to the said element during normal operation (primary drive) but to allow for relative axial movement between the cylindrical nut and said element upon operation of the secondary drive. In the preferred embodiments therefore the axial fixing means is attached to the cylindrical nut and the rotor.

In embodiments of the invention comprising anchoring means it is preferable for the axial fixing means to comprise the anchoring means, so that a single element fulfils both functions. However, axial movement of the cylindrical nut is a problem in any embodiment and therefore it is preferable that axial fixing means are provided in those embodiments wherein the greater operational resistance of the secondary drive is provided by friction.

Preferably the axial fixing means comprises at least one shear member which shears upon application of a predetermined torque.

Preferably a plurality of shear members are arranged to protrude radially from the cylindrical nut and locate within recesses in said element.

In embodiments where the greater resistance to operation of the secondary drive is provided purely by a frictional difference between the two drives, during normal operation the torque of the rotor is carried by the threads of the redundant (the secondary) drive, i.e. preferably the threads on the interior of the rotor and the exterior of the cylindrical nut. Therefore, the shear members provide a link to the cylindrical nut and prevent any axial movement. However, upon activation of the secondary drive the torque experienced by the shear members causes them to sheer such that they do not hinder the axial movement of the cylindrical nut relative to the rotor when this becomes necessary. This provides a very quick, smooth transition during jamming with the minimal adverse transient impact on actuator position.

The inclusion of axial fixing means to prevent axial movement of the primary drive is thought to be novel and inventive in its own right and therefore, viewed from another aspect, the present invention provides an electro-mechanical linear actuator comprising a rotor, a co-axial output ram and a co-axial rotary -to-linear drive, wherein axial fixing means are provided to maintain the axial position of the drive in respect to either the rotor or the output ram.

In this embodiment the term 'rotor' is not restricted to the rotor of the motor but instead extends to any element which transmits torque to the rotary to linear drive.

Preferably the axial fixing means comprise at least one shear member axially protruding from the drive and located within a recess in the rotor or the output ram.

Preferably the motor is a brushless DC motor. Such a motor comprises resolvers which can be used to monitor the rotational position of the rotor of the motor. It is further preferable that the actuator comprises a linear variable differential transducer (LVDT) to monitor the linear position of the output ram. Together these two components can be used to monitor the position of the output ram and also how much it is displaced by one full turn of the rotor.

Preferably the primary and secondary drives have differing leads or pitches. By this it is meant that one full turn of the rotor will move the output ram by a different amount depending on which drive is in operation This allows the user to know which drive is in operation simply through use of the LVDT and resolvers. This is useful as it does not require any additional sensors to be included and alerts the user when the primary drive has failed, thus enabling it to be fixed or replaced at the next available opportunity.

A preferred embodiment of the present invention will now be described, by way of example only, with reference to the accompanying drawings, in which:
Figure 1 shows a linear actuator according to the present invention in cross section; and

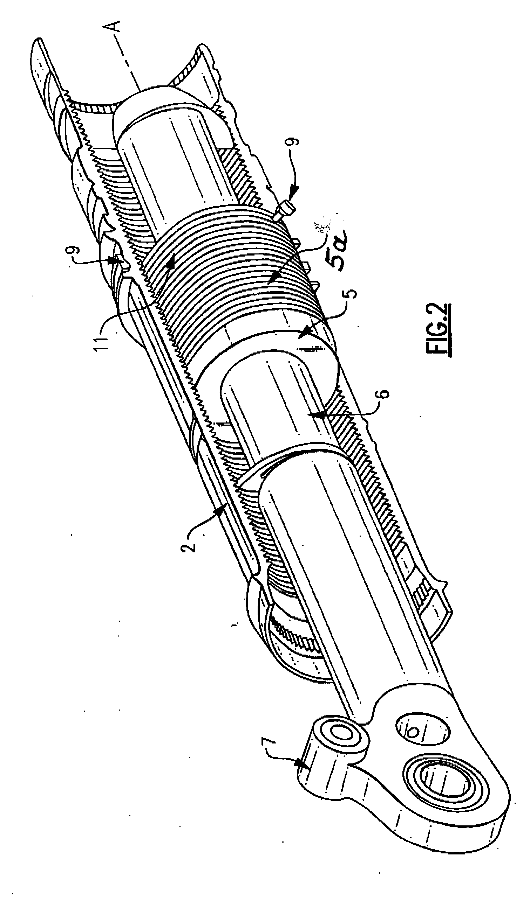

Figure 2 shows a partial cut away perspective view of the drive systems of the linear actuator of Figure 1.

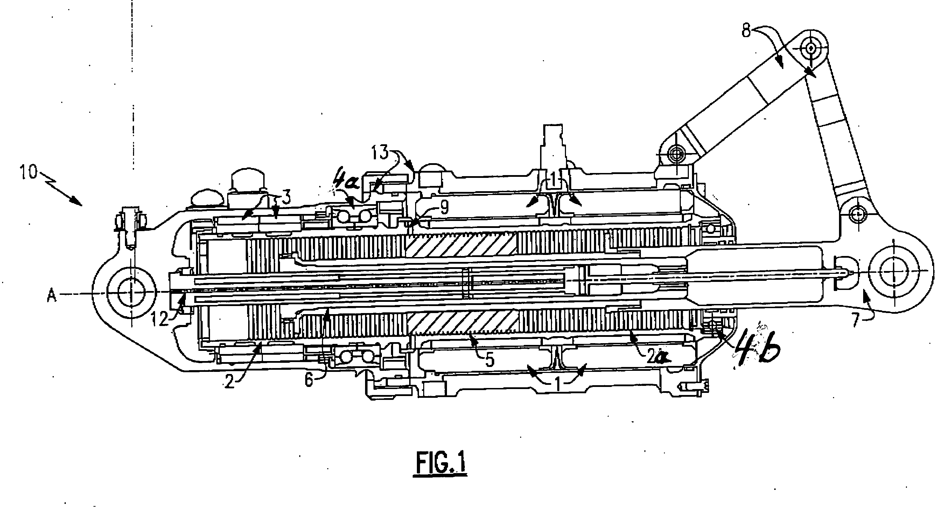

Figure 1 shows a linear actuator 10 according to the invention. The actuator 10 includes a motor which comprises four stators 1 spaced around a rotor 2 to be concentric therewith. The four stators allow for redundancy in case of malfunction of one of these stators. In this embodiment the motors are of a brushless DC configuration and therefore require commutation. This is provided by rotary, angular position transducers in the form of resolvers 3 positioned concentrically around the rotor 2.

The rotor 2 comprises a hollow cylindrical rod which is free to rotate about its longitudinal axis A and is axially and radially supported on axial and radial bearings 4a, 4b. Cylindrical output ram 7 passes through the rotor 2 such that the two elements are coaxial. The diameter of output ram 7 is less than the internal diameter of rotor 2 so that there is no direct contact between the components. The output ram 7 is held in position by torque arms 8, which allow for linear movement along the central axis A but do not allow the ram 7 to rotate about this axis. The torque arms 8 are connected to environmental and structural casing 13, which houses the actuator.

The linear actuator comprises a primary drive for driving the output ram under normal operating conditions and a secondary redundant drive for driving the output ram if the primary drive ceases to function.

Output ram 7 is cylindrical in shape and is connected at one end thereof to an application requiring actuation, such as a flight control surface. The outer surface of the output ram 7 includes a threaded portion known as the roller screw shaft 6. The remainder of the surface is smooth. The roller screw shaft 6 is used to move the ram 7 in the linear direction and forms one element of the primary drive.

The roller screw shaft 6 is encircled by a roller screw nut 5. The roller screw nut 5 is an annular member, coaxial to both the output ram 7 and the rotor 2. It is smaller in length than both the rotor 2 and the output ram 7 and has a thickness equal to the radial distance between the roller 2 and the output ram 7. The roller screw nut 5 therefore provides a physical connection between the rotor 2 and the output ram 7. The exterior of the roller screw nut 5 comprises a series of redundant drive threads 5a. The interior of the roller screw nut 5 also comprises a thread, which engages with a number of planetary rollers (not shown) housed within the nut.

The roller screw nut 5 is positioned on the output ram 7 such that the planetary rollers engage with the threads of the roller screw shaft 6. In normal use the roller screw nut 5 forms the second element of the primary drive, which converts the rotary motion of the rotor 2 into the linear movement of the output ram 7 by the action of the planetary rollers engaging with the threads on the roller screw shaft 6.

As the stators 1 rotate the rotor 2 about its axis A, torques within the rotor 2 are transmitted to the redundant drive thread flanks on the external diameter of the roller screw nut 5. The external redundant threads 5a of the roller screw nut 5 mesh with a thread 2a provided on the inner surface of the rotor 2 to provide a secondary, redundant drive of the lead screw type. As the redundant drive is based on a plain lead screw its operation is dominated by sliding frictions which will always be significantly higher than the rolling frictions of the primary drive roller screw. This difference in frictions ensures that in normal operation the torque applied to the external threads 5a of the roller screw nut 5 results in a relative motion between the roller screw planetary rollers and the roller screw shaft 6, as opposed to between the higher friction rotor 2 and roller screw nut 5, i.e. to operate the primary drive and not the secondary redundant drive. Essentially therefore, the rotor 2 and the roller screw nut 5 will rotate as a single body during normal operation, with the roller screw nut 5 remaining stationary in the axial direction. As the roller screw nut 5 rotates, the planetary rollers are rotated by the internal thread of the roller nut 5 and transmit the force to the roller screw shaft 6, where the inter-engaging threads convert this rotary motion to linear movement of the output ram 7. The direction of movement of the output ram 7 depends on the direction of rotation of the rotor 2. The planetary rollers (not shown) are designed to efficiently convert rotary motion to linear motion with rolling friction contacts. Using these rollers reduces friction and reduces the risk of jamming. However, it is possible to use other devices, such as a ball screw or a plain lead screw.

As a result of the torque generated within the motors a torque reaction also exists within the output ram 7. This is countered by the torque arms 8, which close the torque loop.

When the actuator is generating an axial load, the balance of rolling and sliding frictions ensures the preferred drive will always be the roller screw drive (i.e. the primary drive) unless seizure, or severe degradation of the roller screw changes this balance. If the balance of friction does change due to seizure (equivalent to infinite friction) or severe degradation (increase in friction beyond the sliding friction of the secondary redundant drive) of the primary drive then the roller screw nut 5 will not rotate relative to the output ram 7 and so the ram cannot move axially. The relative rotation will then switch to between the rotor 2 and roller screw nut 5. When this occurs the roller screw nut 5 will be moved in the axial direction along the internal thread 2a of the rotor 2, taking the output ram 7 with it. The transition between mechanical drives is achieved with limited transient disturbance.

In order to prevent the axial drift of the roller screw nut 5 relative to the rotor 2 during primary drive operation under time and vibration, shear devices are used. These are a plurality of pegs 9 positioned in grooves 11 on the exterior of the roller screw nut 5 such that they extend radially from the roller screw nut 5. Rotor 2 comprises a series of holes or a groove into which the distal ends of the shear pegs 9 can be inserted. These devices therefore axially fix the roller screw nut 5 in relation to the rotor 2 until such time as the primary drive jams. Under normal operating conditions these shear devices 9 do not carry the motor drive torque which, as described previously, is carried by redundant thread surface frictions. As the switch between drives occurs and the roller screw nut 5 rotates relative to the rotor 2, the pegs 9 shear in the region of the redundant thread 5a. Depending on the application, a variable quantity of these shear devices may be fitted which could also be in a range of materials from metals to polymers. In one embodiment, two shear devices are used.

In other embodiments of the present invention the primary and secondary drives are both low friction drives, as this increases the efficiency of the actuator when the secondary drive is operational. In this case therefore, roller screw nut 5 could be replaced by a ball screw nut, having redundant threads 5a co-operating via ball bearings with rotor thread 2a to form the secondary drive and a second, interior thread of the ball screw nut co-operating via ball bearings with threads on the output ram 7 to form the primary drive.

In this case, as both drives have the same frictional resistance to operation, the secondary drive must be prevented from operating under normal conditions by an alternative means. In this embodiment therefore the shear pegs 9 have a dual function; to prevent relative rotation of the ball screw nut and the rotor 2 as well as preventing axial movement of the ball screw nut. Therefore, stronger pegs are provided which can carry the motor torque supplied when the primary drive is operational. When the primary drive jams such that the ball screw nut can no longer rotate relative to the output ram 7, a feedback circuit increases the current supplied to the motor, thus increasing the torque it produces to a level at which the shear pins 9 shear. This releases the redundant drive and allows it to operate such that the ball screw nut rotates relative to the rotor to move axially along it, taking the output ram 7 with it.

The axial position of the roller screw nut 5 relative to the rotor 2 is significant because this governs the linear stroke capability of the redundant drive. As the position of the output ram 7 at the time of the primary drive seizure cannot be predicted, at least one full stroke must be present on the rotor 2 on either side of the roller screw nut 5 in the as assembled position in order to ensure that the output ram 7 can be fully extended or retracted regardless of the position of the ram 7 at the moment of primary drive failure. The linear position of the output ram 7 is monitored by a linear variable differential transducer (LVDT) 12 so that accurate position control of the actuator can be achieved.

The actuator is designed to have the ability to passively monitor the failure of the primary drive and operation of the redundant drive without additional sensors. This is achieved through different gearing being provided between the redundant drive and the primary drive. For example the primary drive screw may have a lead of 5mm and the redundant drive a lead of 4mm. During operation a simple algorithm within the remote controller looks at the gearing, or the relationship between the linear and rotary movements, using the resolver 3 signals and the signal from the LVDT 12. This provides a continuous means of monitoring which drive is in operation at any time.

In addition to the above, the magnets are integrated within the rotor 2. Traditionally, motors come as a stator and rotor package, where the rotor comprises a set of magnets attached to a steel cylinder for attachment to the customer's shaft. The steel cylinder locates the magnets, reacts the torques and completes the magnetic circuit. In the present invention these functions are carried out by the actuator rotor 2, which also carries out the significant functions of providing the redundant mechanical drive and carrying the structural axial loads of the system. This integration of the two components to perform multiple functions concurrently provides a significant mass saving to the actuator.

It will be appreciated that the embodiments described above are preferred embodiments only of the invention. Thus various changes could be made to the embodiments shown which would fall within the scope of the invention as defined by the claims. For example, both the primary and secondary drives could comprise planetary roller screws or any other suitable type of device.

## Claims

1. An electro-mechanical linear actuator (10) comprising a motor connected to first and second drives, each of the first and second drives, when in operation, converting rotary to linear motion by rotation of a first element relative to a second element, **characterised in that** the electro-mechanical linear actuator is configured such that a resistance to operation of the second drive is greater than that of the first drive, such that when the first drive is operational the second drive is not and when the first drive fails, relative rotational force between the first and second elements of the second drive increases to cause the second drive to become operational.

2. An electro-mechanical linear actuator (10) as claimed in claim 1, wherein the second drive has a greater frictional resistance to operation than the first drive.

3. An electro-mechanical linear actuator (10) as claimed in claim 2, wherein the second drive comprises a lead screw.

4. An electro-mechanical linear actuator (10) as claimed in claim 2 or 3, wherein the first drive comprises a ball screw.

5. An electro-mechanical linear actuator (10) as claimed in claim 2 or 3, wherein the first drive comprises a planetary roller screw.

6. An electro-mechanical linear actuator (10) as claimed in any of claims 1 to 5, wherein an anchoring means is provided to prevent relative rotation of the first and second elements of the second drive when the first drive is operational, and the anchoring means being adapted to release drive elements of the second drive when subjected to a predetermined rotational force provided by an increase in the relative rotational force between the first and second elements of the second drive.

7. An electro-mechanical linear actuator (10) as claimed in claim 6, wherein the anchoring means extends between the first and second elements of the second drive and is adapted to shear when the predetermined rotational force is applied thereto.

8. An electro-mechanical linear actuator (10) as claimed in claim 6, wherein the anchoring means comprises spring loaded detents which are secured to the first element of the second drive and which are biased to protrude into grooves provided in the second element of the second drive such that the spring loaded detents are released from the grooves when the predetermined rotational force is applied thereto.

9. An electro-mechanical linear actuator (10) as claimed in claim 6, 7 or 8, wherein the predetermined rotational force is provided by an increase in a torque produced by the motor.

10. An electro-mechanical linear actuator (10) as claimed in any preceding claim, wherein no electro-mechanical component other than the motor is required to bring the second drive into operation.

11. An electro-mechanical linear actuator (10) as claimed in any preceding claim, wherein the first and second drives are in direct communication with each other.

12. An electro-mechanical linear actuator (10) as claimed in any preceding claim, wherein a rotor (2) of the motor is in direct communication with at least one of the first and second drives.

13. An electro-mechanical linear actuator (10) as claimed in any preceding claim, wherein the first and second drives are coaxial to each other.

14. An electro-mechanical linear actuator (10) as claimed in any preceding claim, wherein a rotor (2) comprises an elongated hollow cylinder which is connected via the first and second drives to a generally cylindrical output ram (7).

15. An electro-mechanical linear actuator (10) as claimed in claim 14, wherein the generally cylindrical output ram (7) is coaxial to but radially spaced from the rotor (2) and is moveable in an axial direction.

16. An electro-mechanical linear actuator (10) as claimed in claim 15, wherein the first and second drives are located within a radial space between the rotor (2) and the generally cylindrical output ram (7).

17. An electro-mechanical linear actuator (10) as claimed in claim 16, wherein the generally cylindrical output ram-(7) extends through the rotor (2).

18. An electro-mechanical linear actuator (10) as claimed in any of claims 14 to 17, wherein the electro-mechanical linear actuator comprises a cylindrical nut (5) positioned coaxially with, and radially between, the generally cylindrical output ram (7) and the rotor (2), wherein the cylindrical nut rotates relative to the generally cylindrical output ram when one of the first and second drives is in operation and relative to the rotor when the other of the first and second drives is in operation.

19. An electro-mechanical linear actuator (10) as claimed in claim 18, wherein the rotor (2) comprises a thread (2a) on an interior surface of the rotor which co-operates with a thread (5a) provided on an exterior of the cylindrical nut

20. An electro-mechanical linear actuator (10) as claimed in claim 19, wherein the cylindrical nut (5) further comprises a thread on an interior surface of the cylindrical nut which co-operates with a thread provided on an exterior of the generally cylindrical output ram (7).

21. An electro-mechanical linear actuator (10) as claimed in any preceding claim, wherein the electro-mechanical linear actuator further comprises an axial fixing means, the axial fixing means being attached at one end to the first element of the second drive and at another end to the second element of the second drive, the axial fixing means being adapted to maintain an axial position of the first element relative to the second element during normal operation but to allow for relative axial movement between the first and second elements upon operation of the second drive.

22. An electro-mechanical linear actuator (10) as claimed in claim 21, wherein the axial fixing means comprises at least one shear member which shears upon application of a predetermined torque.

23. An electro-mechanical linear actuator (10) as claimed in claim 21 or 22 when dependent on claim 6, wherein the axial fixing means comprises the anchoring means.

24. An electro-mechanical linear actuator (10) as claimed in any preceding claim, wherein the first and second drives have different leads such that a controller can determine which of the first and second drives is operation.

25. An electro-mechanical linear actuator (10) as claimed in claim 1, the electro-mechanical linear actuator being arranged such that, during normal operation, the motor produces a predetermined torque to operate the first drive, the second drive being non-operational, and that upon failure of the first drive, the torque produced by the motor increases to initiate operation of the second drive.

## Patentansprüche

1. Elektromechanischer Linearaktuator (10) mit einem Motor, der mit einem ersten und einem zweiten Antrieb verbunden ist, wobei der erste und der zweite Antrieb im Betrieb jeweils eine Drehbewegung durch Rotation eines ersten Elements relativ zu einem zweiten Element in eine lineare Bewegung umwandeln,
**dadurch gekennzeichnet, dass** der elektromechanische Linearaktuator derart konfiguriert ist, dass ein Widerstand gegen einen Betrieb des zweiten Antriebs höher ist als der des ersten Antriebs, so dass dann, wenn der erste Antrieb in Betrieb ist, der zweite Antrieb nicht in Betrieb ist, und bei einem Defekt des ersten Antriebs die relative Rotationskraft zwischen dem ersten und dem zweiten Element des zweiten Antriebs zunimmt und **dadurch** der zweite Antrieb dazu veranlasst wird, in Betrieb zu gehen.

2. Elektromechanischer Linearaktuator (10) nach Anspruch 1,
wobei der zweite Antrieb einen höheren Reibungswiderstand gegen einen Betrieb aufweist als der erste Antrieb.

3. Elektromechanischer Linearaktuator (10) nach Anspruch 2,
wobei der zweite Antrieb eine Gewindespindel aufweist.

4. Elektromechanischer Linearaktuator (10) nach Anspruch 2 oder 3,
wobei der erste Antrieb eine Kugelumlaufspindel aufweist.

5. Elektromechanischer Linearaktuator (10) nach Anspruch 2 oder 3,
wobei der erste Antrieb eine Planetenwälzgewindespindel aufweist.

6. Elektromechanischer Linearaktuator (10) nach einem der Ansprüche 1 bis 5,
wobei eine Verankerungseinrichtung vorgesehen ist, um eine relative Rotation des ersten und des zweiten Elements des zweiten Antriebs zu verhindern, wenn der erste Antrieb in Betrieb ist, und wobei die Verankerungseinrichtung dazu ausgebildet ist, Antriebselemente des zweiten Antriebs freizugeben, wenn sie einer vorbestimmen Rotationskraft ausgesetzt wird, die durch einen Anstieg in der relativen Rotationskraft zwischen dem ersten und dem zweiten Element des zweiten Antriebs bereitgestellt wird.

7. Elektromechanischer Linearaktuator (10) nach Anspruch 6,
wobei die Verankerungseinrichtung sich zwischen dem ersten und dem zweiten Element des zweiten Antriebs erstreckt und abscherbar ist, wenn die vorbestimmte Rotationskraft auf diese aufgebracht wird.

8. Elektromechanischer Linearaktuator (10) nach Anspruch 6,
wobei die Verankerungseinrichtung unter Federvorspannung stehende Arretierglieder aufweist, die an dem ersten Element des zweiten Antriebs befestigt sind und die derart vorgespannt sind, dass sie in in dem zweiten Element des zweiten Antriebs vorgesehene Nuten hineinragen, so dass die unter Federvorspannung stehenden Arretierglieder aus den Nuten freigegeben werden, wenn die vorbestimmte Rotationskraft auf diese aufgebracht wird.

9. Elektromechanischer Linearaktuator (10) nach Anspruch 6, 7 oder 8,
wobei die vorbestimmte Rotationskraft durch einen Anstieg in dem von dem Motor erzeugten Drehmoment bereitgestellt wird.

10. Elektromechanischer Linearaktuator (10) nach einem der vorausgehenden Ansprüche,
wobei keine andere elektromechanische Komponente als der Motor erforderlich ist, um den zweiten Antrieb in Betrieb zu setzen.

11. Elektromechanischer Linearaktuator (10) nach einem der vorausgehenden Ansprüche,
wobei der erste und der zweite Antrieb in direkter Verbindung miteinander stehen.

12. Elektromechanischer Linearaktuator (10) nach einem der vorausgehenden Ansprüche,
wobei ein Rotor (2) des Motors in direkter Verbindung mit mindestens einem von dem ersten und dem zweiten Antrieb steht.

13. Elektromechanischer Linearaktuator (10) nach einem der vorausgehenden Ansprüche,
wobei der erste und der zweite Antrieb koaxial zueinander sind.

14. Elektromechanischer Linearaktuator (10) nach einem der vorausgehenden Ansprüche,
wobei ein Rotor einen länglichen Hohlzylinder aufweist, der über den ersten und den zweiten Antrieb mit einem im Wesentlichen zylindrischen Ausgangsstößel (7) verbunden ist.

15. Elektromechanischer Linearaktuator (10) nach Anspruch 14,
wobei der im Wesentlichen zylindrische Ausgangsstößel (7) koaxial zu, jedoch radial von dem Rotor (2) beabstandet angeordnet ist und in Axialrichtung beweglich ist.

16. Elektromechanischer Linearaktuator (10) nach Anspruch 15,
wobei der erste und der zweite Antrieb innerhalb eines radialen Raumes zwischen dem Rotor (2) und dem im Wesentlichen zylindrischen Ausgangsstößel (7) angeordnet sind.

17. Elektromechanischer Linearaktuator (10) nach Anspruch 16,
wobei sich der im Wesentlichen zylindrische Ausgangsstößel (7) durch den Rotor (2) hindurch erstreckt.

18. Elektromechanischer Linearaktuator (10) nach einem der Ansprüche 14 bis 17,
wobei der elektromechanische Linearaktuator eine Zylindermutter (5) aufweist, die koaxial zu und radial zwischen dem im Wesentlichen zylindrischen Ausgangsstößel (7) und dem Rotor (2) angeordnet ist, wobei sich die Zylindermutter relativ zu dem im Wesentlichen zylindrischen Ausgangsstößel rotationsmäßig bewegt, wenn einer von dem ersten und dem zweiten Antrieb in Betrieb ist, und sich relativ zu dem Rotor rotationsmä-βig bewegt, wenn der andere von dem ersten und dem zweiten Antrieb in Betrieb ist.

19. Elektromechanischer Linearaktuator (10) nach Anspruch 18,
wobei der Rotor (2) ein Gewinde (2a) an einer Innenfläche des Rotors aufweist, das mit einem an einer Außenseite der Zylindermutter vorgesehenen Gewinde (5a) zusammenwirkt.

20. Elektromechanischer Linearaktuator (10) nach Anspruch 19,
wobei die Zylindermutter (5) ferner ein Gewinde (2a) an einer Innenfläche der Zylindermutter aufweist, das mit einem an einer Außenseite des im Wesentlichen zylindrischen Ausgangsstößels (7) vorgesehenen Gewinde zusammenwirkt.

21. Elektromechanischer Linearaktuator (10) nach einem der vorausgehenden Ansprüche,
wobei der elektromechanische Linearaktuator ferner eine axiale Fixiereinrichtung aufweist, wobei die axiale Fixiereinrichtung an einem Ende an dem ersten Element des zweiten Antriebs angebracht ist und an einem anderen Ende an dem zweiten Element des zweiten Antriebs angebracht ist,
wobei die axiale Fixiereinrichtung dazu ausgebildet ist, während eines nomalen Betriebs eine axiale Position des ersten Elements relativ zu dem zweiten Element aufrecht zu erhalten, jedoch bei Betrieb des zweiten Antriebs eine relative Axialbewegung zwischen dem ersten und dem zweiten Element zuzulassen.

22. Elektromechanischer Linearaktuator (10) nach Anspruch 21,
wobei die axiale Fixiereinrichtung mindestens ein Scherelement aufweist, das bei Aufbringen eines vorbestimmten Drehmoments abschert.

23. Elektromechanischer Linearaktuator (10) nach Anspruch 21 oder 22 bei Abhängigkeit von Anspruch 6,
wobei die axiale Fixiereinrichtung die Verankerungseinrichtung aufweist.

24. Elektromechanischer Linearaktuator (10) nach einem der vorausgehenden Ansprüche,
wobei der erste und der zweite Antrieb unterschiedliche Gewindesteigungen aufweisen, so dass eine Steuerung feststellen kann, welcher von dem ersten und dem zweiten Antrieb in Betrieb ist.

25. Elektromechanischer Linearaktuator (10) nach Anspruch 1,
wobei der elektromechanische Linearaktuator derart ausgebildet ist, dass während des normalen Betriebs der Motor ein vorbestimmtes Drehmoment zum Betreiben des ersten Antriebs erzeugt, wobei der zweite Antrieb nicht in Betrieb ist, und wobei bei einem Defekt des ersten Antriebs das von dem Motor erzeugte Drehmoment zunimmt, um den Betrieb des zweiten Antriebs zu initiieren.

## Revendications

1. Actionneur linéaire électromécanique (10) comprenant un moteur connecté à des premier et deuxième organes d'entraînement, chacun des premier et deuxième organes d'entraînement, quand il est en fonctionnement, convertissant un mouvement rotatif en un mouvement linéaire par une rotation d'un premier élément par rapport à un deuxième élément, **caractérisé en ce que** l'actionneur linéaire électromécanique est configuré de façon à ce qu'une résistance au fonctionnement du deuxième organe d'entraînement soit supérieure à celle du premier organe d'entraînement de telle sorte que, quand le premier organe d'entraînement est en fonctionnement, le deuxième organe d'entraînement ne l'est pas et que, quand le premier organe d'entraînement devient défaillant, une force de rotation relative entre les premier et deuxième éléments du deuxième organe d'entraînement augmente de façon à amener le deuxième organe d'entraînement à devenir opérationnel.

2. Actionneur linéaire électromécanique (10) selon la revendication 1, dans lequel le deuxième organe d'entraînement possède une résistance de frottement au fonctionnement plus élevée que celle du premier organe d'entraînement.

3. Actionneur linéaire électromécanique (10) selon la revendication 2, dans lequel le deuxième organe d'entraînement comprend une vis mère.

4. Actionneur linéaire électromécanique (10) selon la revendication 2 ou 3, dans lequel le premier organe d'entraînement comprend une vis à billes.

5. Actionneur linéaire électromécanique (10) selon la revendication 2 ou 3, dans lequel le premier organe d'entraînement comprend une vis à rouleaux planétaires.

6. Actionneur linéaire électromécanique (10) selon l'une quelconque des revendications 1 à 5, dans lequel des moyens d'ancrage sont prévus afin d'empêcher toute rotation relative des premier et deuxième éléments du deuxième organe d'entraînement quand le premier organe d'entraînement est en fonctionnement, et les moyens d'ancrage sont adaptés pour libérer les éléments d'entraînement du deuxième organe d'entraînement quand ils sont soumis à une force de rotation prédéterminée procurée par une augmentation de la force de rotation relative entre les premier et deuxième éléments du deuxième organe d'entraînement.

7. Actionneur linéaire électromécanique (10) selon la revendication 6, dans lequel les moyens d'ancrage s'étendent entre les premier et deuxième éléments du deuxième organe d'entraînement, et ils sont adaptés pour cisailler quand la force de rotation prédéterminée est appliquée sur eux.

8. Actionneur linéaire électromécanique (10) selon la revendication 6, dans lequel les moyens d'ancrage comprennent des détentes chargées par ressort qui sont assujettis au premier élément du deuxième organe d'entraînement et qui sont sollicitées de façon à faire saillie à l'intérieur de gorges prévues dans le deuxième élément du deuxième organe d'entraînement de façon à ce que les détentes chargées par ressort se désengagent des gorges quand la force de rotation prédéterminée est appliquée sur elles.

9. Actionneur linéaire électromécanique (10) selon la revendication 6, 7 ou 8, dans lequel la force de rotation prédéterminée est procurée par une augmentation dans un couple produit par le moteur.

10. Actionneur linéaire électromécanique (10) selon l'une quelconque des revendications précédentes, dans lequel aucun composant électromécanique autre que le moteur n'est nécessaire afin d'amener le deuxième organe d'entraînement en fonctionnement.

11. Actionneur linéaire électromécanique (10) selon l'une quelconque des revendications précédentes, dans lequel les premier et deuxième organes d'entraînement sont en communication directe l'un avec l'autre.

12. Actionneur linéaire électromécanique (10) selon l'une quelconque des revendications précédentes, dans lequel un rotor (2) du moteur est en communication directe avec au moins un des premier et deuxième organes d'entraînement.

13. Actionneur linéaire électromécanique (10) selon l'une quelconque des revendications précédentes, dans lequel les premier et deuxième organes d'entraînement sont coaxiaux l'un par rapport à l'autre.

14. Actionneur linéaire électromécanique (10) selon l'une quelconque des revendications précédentes, dans lequel un rotor (2) comprend un cylindre allongé creux qui est raccordé, par le biais des premier et deuxième organes d'entraînement, à un vérin de sortie généralement cylindrique (7).

15. Actionneur linéaire électromécanique (10) selon la revendication 14, dans lequel le vérin de sortie généralement cylindrique (7) est coaxial par rapport au rotor (2), mais radialement espacé par rapport à celui-ci, et il peut se déplacer dans une direction axiale.

16. Actionneur linéaire électromécanique (10) selon la revendication 15, dans lequel les premier et deuxième organes d'entraînement sont placés à l'intérieur d'un espace radial entre le rotor (2) et le vérin de sortie généralement cylindrique (7).

17. Actionneur linéaire électromécanique (10) selon la revendication 16, dans lequel le vérin de sortie généralement cylindrique (7) s'étend au travers du rotor (2).

18. Actionneur linéaire électromécanique (10) selon l'une quelconque des revendications 14 à 17, dans lequel l'actionneur linéaire électromécanique comprend un écrou cylindrique (5) qui est placé coaxialement par rapport au vérin de sortie généralement cylindrique (7) et au rotor (2), et radialement entre eux, dans lequel l'écrou cylindrique tourne par rapport au vérin de sortie généralement cylindrique quand l'un des premier et deuxième organes d'entraînement est en fonctionnement, et il tourne par rapport au rotor quand l'autre des premier et deuxième organes d'entraînement est en fonctionnement.

19. Actionneur linéaire électromécanique (10) selon la revendication 18, dans lequel le rotor (2) comprend un pas de vis (2a) sur une face interne du rotor qui coopère avec un pas de vis (5a) réalisé sur un extérieur de l'écrou cylindrique.

20. Actionneur linéaire électromécanique (10) selon la revendication 19, dans lequel l'écrou cylindrique (5) comprend de plus un pas de vis sur une face interne de l'écrou cylindrique qui coopère avec un pas de vis réalisé sur un extérieur du vérin de sortie généralement cylindrique (7).

21. Actionneur linéaire électromécanique (10) selon l'une quelconque des revendications précédentes, dans lequel l'actionneur linéaire électromécanique comprend de plus des moyens de fixation axiale, les moyens de fixation axiale étant rattachés à une extrémité au premier élément du deuxième organe d'entraînement et à une autre extrémité au deuxième élément du deuxième organe d'entraînement, les moyens de fixation axiale étant adaptés pour maintenir une position axiale du premier élément par rapport au deuxième élément durant un fonctionnement normal, et pour autoriser un mouvement axial relatif entre les premier et deuxième éléments durant un fonctionnement du deuxième organe d'entraînement.

22. Actionneur linéaire électromécanique (10) selon la revendication 21, dans lequel les moyens de fixation axiale comprennent au moins un élément de cisaillement qui cisaille lors de l'application d'un couple prédéterminé.

23. Actionneur linéaire électromécanique (10) selon la revendication 21 ou 22 quand elles dépendent de la revendication 6, dans lequel les moyens de fixation axiale comprennent les moyens d'ancrage.

24. Actionneur linéaire électromécanique (10) selon l'une quelconque des revendications précédentes, dans lequel les premier et deuxième organes d'entraînement ont des avances différentes, de sorte qu'un contrôleur puisse déterminer lequel des premier et deuxième organes d'entraînement est en fonctionnement.

25. Actionneur linéaire électromécanique (10) selon la revendication 1, l'actionneur linéaire électromécanique étant agencé de telle sorte que, durant un fonctionnement normal, le moteur produit un couple prédéterminé pour faire fonctionner le premier organe d'entraînement, le deuxième organe d'entraînement n'étant pas opérationnel et que en cas de défaillance du premier organe d'entraînement, le couple produit par le moteur augmente de façon à initier un fonctionnement du deuxième organe d'entraînement.
